# EUROPEAN PATENT SPECIFICATION

(11) **EP 3 620 608 B1**
(45) Date of publication and mention of the grant of the patent: **24.02.2021**
(21) Application number: 19196395.8
(22) Date of filing: 10.09.2019
(51) Int. Cl.: F01D 5/10, F01D 25/16, F16C 27/04

(54) **BEARING ASSEMBLY WITH A REDUCED AXIAL SPACE SELF-PRESSURIZING DAMPER AND CORRESPONDING METHOD FOR MAINTAINING PRESSURE IN SAID DAMPER**
LAGERANORDNUNG MIT EINEM DRUCKREGULIERENDEN DÄMPFER MIT REDUZIERTEM AXIALRAUM UND ZUGEHÖRIGES VERFAHREN ZUR DRUCKERHALTUNG IN EINEM SOLCHEN DÄMPFER
AGENCEMENT DE PALIER AYANT UN AMORTISSEUR AUTO-PRESSURISÉ À ÉSPACE AXIAL RÉDUIT ET PROCÉDÉ ASSOCIÉ DE MAINTIEN DE PRESSION DANS LEDIT AMORTISSEUR

(30) Priority: 10.09.2018 US 201816125875
(43) Date of publication of application: 11.03.2020
(73) Proprietor: United Technologies Corporation, Farmington, CT 06032 (US)
(72) Inventor: GYSLING, Daniel L., South Glastonbury, CT Connecticut 06073 (US); VARNEY, Philip Andrew, Manchester, CT Connecticut 06042 (US)
(74) Representative: Dehns

(56) References cited:
- US-A- 3 574 424
- US-A- 5 215 384
- US-A1- 2019 234 239
- US-A1- 2019 234 459
- US-B2- 10 400 630

## Description

### TECHNICAL FIELD

The present disclosure relates generally to gas turbine engine bearing dampers, and more specifically to a self-pressurizing squeeze film damper.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section further drives the compressor section to rotate. In some examples, a fan is also connected to the shaft and is driven to rotate via rotation of the turbine as well.

Rotating shafts and other rotating turbomachinery of a gas turbine engine are supported relative to a static structure by bearing assemblies. In some engines, the bearing assemblies are enclosed within bearing compartments that allow the bearing assemblies to be more easily lubricated and cooled. In a damped bearing, an outer race is shaped to form an annular cavity between the outer race and the bearing support, which forms a squeeze film damper (SFD) when filled with a damping fluid. With this configuration, radial displacement of the outer race relative to the bearing support is restrained by squeeze film pressure. Document US 5 215 384 A discloses a squeeze film damper bearing having means of automatically centering itself from the force associated with lateral shaft vibration utilizing a floating ring positioned between a housing and a cage with O-rings positioned between adjacent parts to maintain proper clearances.

### SUMMARY OF THE INVENTION

In one aspect of the invention a bearing assembly for a gas turbine engine is provided as set forth in claim 1.

In another example of any of the above described bearing assemblies the pass-through feature is a scalloping on a contact surface of the piston-ring.

In another example of any of the above described bearing assemblies the second piston ring is between the first piston ring and a fluid connection between the first gap and the damping fluid passage, and wherein the fourth piston ring is between the second gap and the damping fluid passage.

In another example of any of the above described bearing assemblies the damping fluid passage is connected to each of the first gap and the second gap via a single plenum.

In another example of any of the above described bearing assemblies the single plenum provides axial vibration damping.

Another example of any of the above described bearing assemblies further includes a fifth piston ring disposed in the damping fluid passage upstream of the single plenum.

In another example of any of the above described bearing assemblies the fifth piston ring includes a pass through feature.

In another example of any of the above described bearing assemblies the pass through feature includes at least one groove intruding into a radially aligned contact surface of the fifth piston ring.

A method for maintaining pressure in a squeeze film bearing damper of a gas turbine engine is provided as defined in claim 9.

In another example of the above described exemplary method for maintaining pressure in a squeeze film bearing damper providing damping fluid from the supply line to the first axially aligned damping gap and from the supply line to the second axially aligned damping gap comprising passing the damping fluid through an annular plenum.

In another example of any of the above described exemplary methods for maintaining pressure in a squeeze film bearing damper providing damping fluid to the annular plenum comprises passing damping fluid through a third piston ring when a pressure in the supply line is greater than a pressure in the annular plenum.

In another example of any of the above described exemplary methods for maintaining pressure in a squeeze film bearing damper each of the axially aligned damping gaps dampens radial vibrations, and wherein the annular plenum dampens axial vibrations.

These and other features of the present invention can be best understood from the following specification and drawings, the following of which is a brief description.

### BRIEF DESCRIPTION OF THE DRAWINGS

Figure 1 illustrates a high level schematic view of an exemplary gas turbine engine.
Figure 2 schematically illustrates an exemplary bearing configuration.
Figure 3 schematically illustrates a self-pressurizing squeeze film damper in accordance with the invention.
Figure 4A illustrates a highly schematic view of a self-pressurizing squeeze film damper, that is in accordance with the invention.
Figure 4B schematically illustrates a portion of the squeeze film damper of Figure 4A in a first position.
Figure 4C illustrates a portion of the squeeze film damper of Figure 4A in a second position.
Figure 5 schematically illustrates an alternate example self-pressurizing squeeze film adapter such as could be used in the examples of Figures 2 and 3 including an additional piston ring.

### DETAILED DESCRIPTION OF AN EMBODIMENT

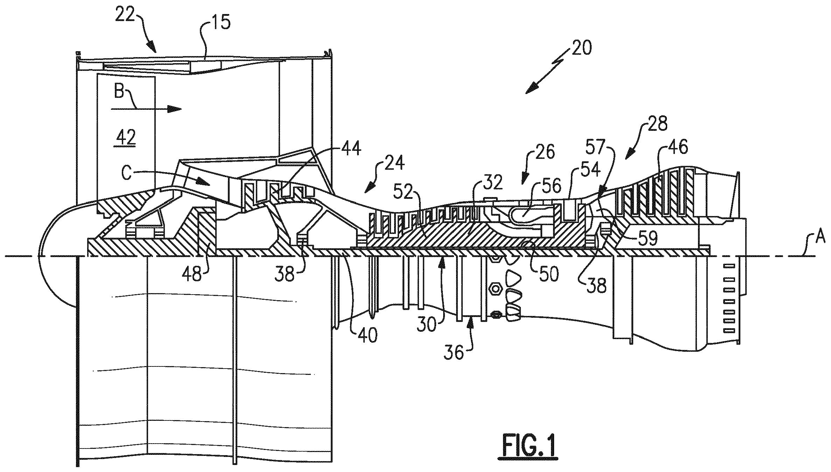

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^^{0.5}. The "Low corrected fan tip speed" as disclosed herein according to one non-limiting embodiment is less than about 1150 ft / second (350.5 meters/second).

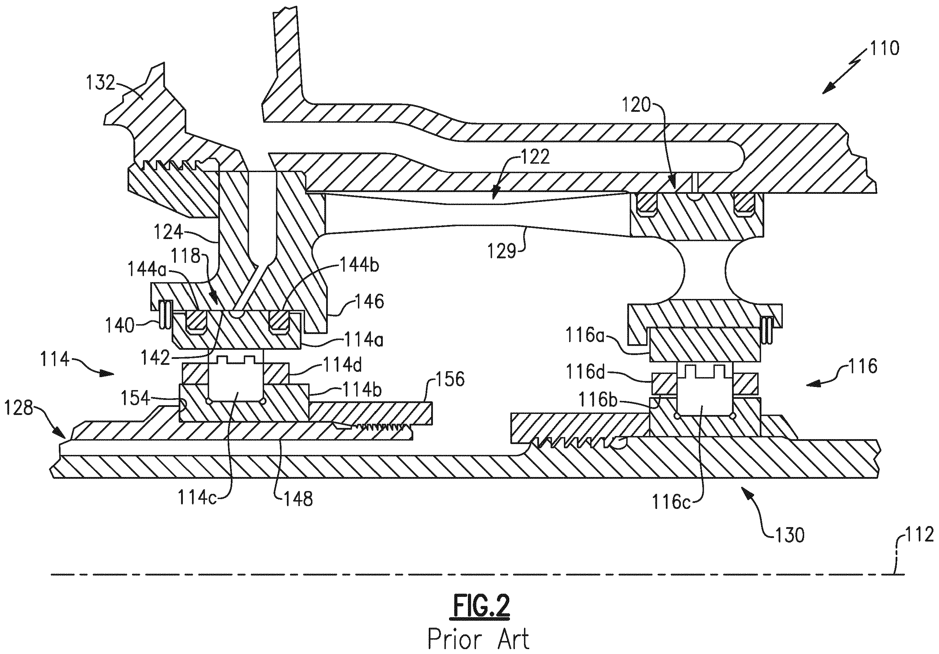

FIG. 2 is a cross-sectional view of a prior art bearing compartment 110, such as could be used as the bearing system 38. The bearing compartment 110 is drawn along rotor centerline 112 of the gas turbine engine 20. A forward bearing 114 and an aft bearing 116 include a forward damping cavity 118 and an aft damping cavity 120, respectively. The damping cavities 118, 120 dampen vibrations of the corresponding bearing. A centering spring 122 extends from the forward bearing 114 to the aft bearing 116. The forward bearing 114 and the aft bearing 116 are any conventional bearing type. The forward bearing 114 has outer race 114a, inner race 114b, rolling elements 114c, and cage 114d. The aft bearing 116 has an outer race 116a, an inner race 116b, rolling elements 116c, and cage 116d. The forward bearing 114, the aft bearing 116, and the centering spring 122 restrain a first spool 128 and a second spool 130, which are concentrically disposed about the rotor centerline 112, relative to each other.

The outer race 114a is spaced apart from a radially inward facing surface 142 of the spring 122 and defines a damping cavity 118 in the gap. Piston seals 144a and 144b enclose axial ends of the damping cavity 118 such that fluid delivered to the cavity 118 is captured between the radially inward facing surface 142 and the bearing 114. By providing a damping fluid to the damping cavity 118, the forward bearing 114 is radially restrained with respect to the centering spring 122 and the casing 132.

The inner race 114b of the forward bearing 114 is affixed to a shaft 148. The shaft 148 rotates around the rotor centerline 112. The forward bearing 114 radially restrains the shaft 148 with respect to the centering spring 122 and the casing 132 while the damping cavity 118 modifies the radial stiffness at the forward bearing 114 to satisfy dynamic conditions of the spool 128.

The damping characteristics of the damping cavity 118 and the stiffness characteristics of the centering spring 122 are selected using any known methods and are dependent on structural parameters of the spools 128 and the 130. Radial deflections of the body 126 relative to the flange 124 are restrained by a restoring force produced by the deformation the resilient member along with the damping effect produced by fluid within the damping cavity 118 during operating of the gas turbine engine.

With continued reference to Figures 1 and 2, Figure 3 schematically illustrates bearing assembly 200 including a self-pressurizing squeeze film damper 210 according to the invention. The self-pressurizing squeeze film damper 210 cross section is drawn along a rotor centerline 201 of a gas turbine engine in which it is incorporated. The bearing assembly 200 includes a housing 204 having a first surface 205 and a second surface 206, both of which are substantially parallel with each other, and with the centerline 201 of the gas turbine engine including the bearing assembly 200.

Included within the bearing assembly 200 is a first outer race surface 209 positioned radially adjacent to, and facing, the first bearing housing surface 205. A first film gap 211 is defined between the first bearing housing surface 205 and the first outer race surface 209. Also included within the bearing assembly 200 is a second outer race surface 216 positioned radially adjacent to, and facing, the second bearing housing surface 206. A second film gap 223 is defined between the second outer race surface 216 and the second bearing housing surface 206.

The first bearing housing surface 205 includes a first piston ring groove 212, and a second piston ring groove 213. The piston ring grooves 212, 213 intrude radially into the first bearing housing surface 205, and receive a corresponding piston ring 214, 215. Each of the corresponding piston rings 214, 215 seals against at least one of two radially aligned (approximately perpendicular to the centerline 201) surfaces of the corresponding piston ring groove 212, 213. Included on a radially aligned surface of one of the piston rings 215 is a pass through feature, such as scalloping, that allows lubricant to pass through the piston ring 215 when the piston ring 215 is contacting one of the radially aligned surfaces of the corresponding groove 213, and not when the piston ring 215 is contacting the other of the radially aligned surfaces of the corresponding groove 213.

Similarly, the second outer race surface 216 includes a first piston ring groove 217 intruding radially into the second outer races surface 216 and a second piston ring groove 219 intruding into the second outer race surface 216. Each of the piston grooves 217, 219 includes a corresponding piston ring 220, 222 disposed within the groove 217, 219. Each of the corresponding piston rings 220, 222 seals against at least one of two radially aligned (approximately perpendicular to the centerline 201) surfaces of the corresponding piston ring groove 217, 219. Included on one of the piston rings 222 is a pass through feature, such as scalloping, that allows lubricant to pass through the piston seal when the piston ring 222 is against one of the radially aligned surfaces of the corresponding groove 219, and not when the piston ring 222 is against the other of the radially aligned surfaces. In alternative examples the pass through feature can be positioned on a face of the surface contacting the piston ring 222, and the interaction between the face and the piston ring 222 creates the pass through feature.

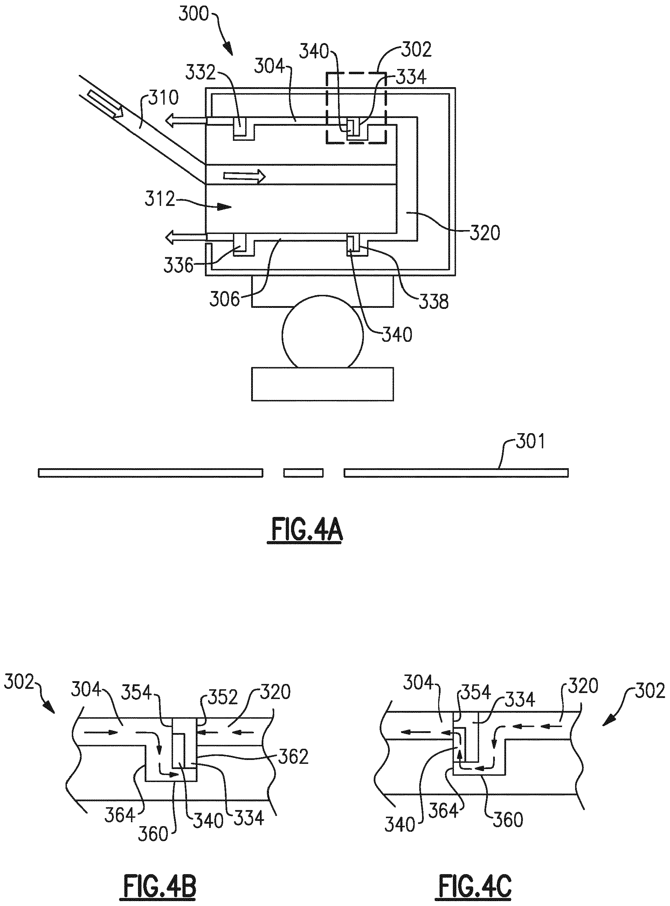

The pass through features described above are illustrated and explained in greater detail with regards to Figures 4A, 4B, and 4C.

Also included in the bearing housing 204 is an oil passage 224 that provides oil to the first gap 211 and to the second gap 223. The oil passage 224 extends between the first and second race surfaces 209, 216 and provides oil to the film gaps 212, 223 through a plenum 240. While illustrated herein as a single connecting hole, it is appreciated that the connection between the oil supply line 224 and the plenum 240 can include multiple openings feeding the plenum 240. During operation of the gas turbine engine, the oil pressure is maintained within each of the gaps 211, 223 due to the flow restrictions from the piston seals 212, 213, 217, 219, thereby allowing for the radial damping effect to occur. Further, the inclusion of the pass through features in two of the piston ring seals 213, 222 allows damping fluid to flow from the oil passage 224 to the film gaps 211, 223 as needed.

With continued reference to Figures 1-3, Figure 4A schematically illustrates a squeeze film damper 300 in a highly schematic configuration. Figure 4B illustrates a portion 302 of the squeeze film damper 300 when a pressure in the radially outer film gap 304 is greater than the pressure in the radially inner film gap 306. Figure 4C illustrates the portion 302 of the squeeze film damper 300 when the pressure in the radially inner film gap 306 is larger than the pressure in the radially outer film gap 304.

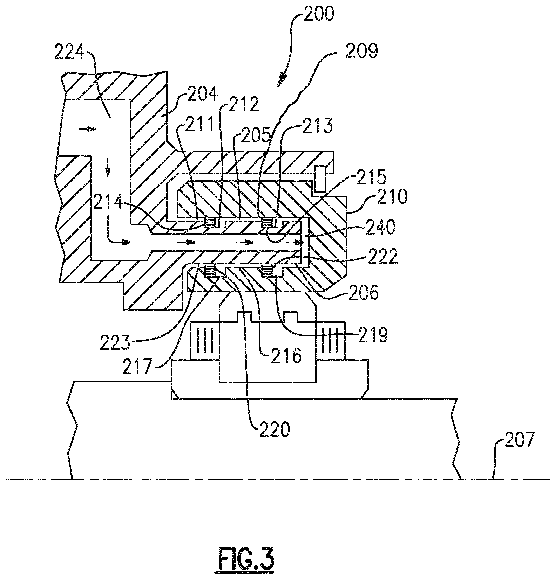

Each of the film gaps 304, 306 are supplied via a common oil supply line 310 that passes through a center of a damper housing 312. The damper housing 312 is grounded to (maintained in a static state relative to) the engine static structure. A damping fluid, such as oil is provided through the damper housing 312 to a supply plenum 320. The supply plenum 320 is a circumferential plenum that fully surrounds an engine centerline 301. The supply plenum 320 is fluidly connected to each of the film gaps 304, 306, and allows the damping fluid from the supply line 310 to pass into each of the corresponding film gaps 304, 306. As with the example of Figure 3, each of the film gaps 304, 306 includes two piston seals 332, 334, 336, 338. The piston seals 334, 338 closest to the plenum 320 each include pass-through features 340 which allow damping fluid to pass from the plenum 320 into the film gap 304, 306 when the pressure in the film gap 304, 306 is less than the pressure in the plenum 320. The pass through features 340 do not allow damping fluid to pass through the piston seal 334, 338 when the pressure in the corresponding film gap 304, 206 is greater than the pressure in the plenum 320, thereby preventing a backflow of damping fluid from the film gaps 304, 306 to the plenum 320.

In other words, the pass through features 340 provide a piston seal 334, 338 that provides a very high flow resistance in one direction, but provides minimal, if any, flow resistance in the opposite direction. This feature can be referred to as preferential flow resistance because it provides high flow resistance in one direction, and reduced flow resistance in the opposite direction. The function of the pas through features 340 can be described as being a feature with a high diodicity due to the high ratio of pressure drop across the feature in one direction to pressure drop across the feature in the opposite direction.

Figures 4B and 4C exemplify this principle by illustrating the portion 302 of the damper 300 including the radially outer piston ring seal 334 that has the pass through feature 340. When the fluid pressure in the film gap 304 is greater than the fluid pressure in the plenum 320, the piston seal 334 shifts toward the plenum 320 until a sealing surface 352 of the piston seal 334 contacts a corresponding sealing surface 362 of the groove 360. The contact between the piston seal 334 and the sealing surface 362 prevents the damping fluid from passing through the piston seal, thereby preventing back flow out of the film gap 304. This state is illustrated in Figure 4B.

In contrast, when the pressure in the plenum 320 is greater than the pressure in the film gap 304, the piston ring 334 is shifted toward the opposite side of the groove 360. As with the example of Figure 4B, the opposite side of the groove 360 includes a sealing surface 364, and the piston ring 334 includes a second sealing surface 354. When the second sealing surfaces 354, 364 are shifted into contact (illustrated in Figure 4C) due to the pressure within the plenum 320 exceeding the pressure in the film gap 304, the pass through feature 340 allows the damping fluid to pass through the piston ring 334 despite the contact. In this way, damping fluid can be provided to the film gap 304 while simultaneously preventing backflow from the film gap 304.

In the exemplary illustration the pass through feature 340 is one or more grooves providing a channel that remains open while the second sealing surfaces 354, 364 are in contact with each other. This configuration is referred to as scalloping. In alternative examples, alternative pass through features that allow the damping fluid to pass through the piston seal while the second sealing surfaces 354, 364 are in contact with each other could be utilized to similar effect. One such alternative is a standard piston ring include a check valve bypass, or an array of reed valves.

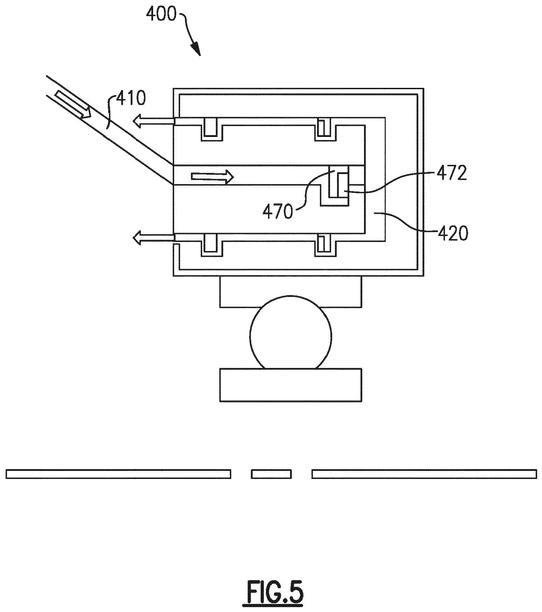

With continued reference to Figures 1-4C, Figure 5 schematically illustrates a second exemplary squeeze film damper 400. The second exemplary squeeze film damper 400 is substantially identical to the squeeze film damper 300 illustrated in Figures 4A, 4B and 4C, with the addition of a fifth piston ring 470 disposed within the oil supply line 410. The fifth piston ring 470 includes a similar pass through feature 472 that is configured to allow the damping fluid to flow from the oil supply line 410 to the plenum 420 when the damping fluid pressure in the supply line 410 is greater than the damping fluid pressure in the plenum 420, but prevents the backflow of damping fluid from the plenum 420 when the pressure in the plenum 420 is greater than the pressure in the supply line 410. In alternative examples, the piston ring 470 can be replaced with a conventional check valve disposed in the supply line 410.

The addition of the piston ring 470 including the pass-through feature 472 increases back flow resistance, as described above when the volume of the effective plenum 420 is reduced to axial motion, thereby creating axial stiffness and providing axial damping as well as the previously described radial damping. Further, the fifth piston ring 470 generates an axial-motion based self-pumping mechanism due to the increased pressure within the plenum 420 due to relative axial motion between the damper housing and rotor.

While described and illustrated in the above examples as including a first and second radially stacked damper, it is appreciated that the context can extend to any number of additional radially stacked dampers, and still fall within the present disclosure. Further, while the film gaps are illustrated as being axially aligned, it is understood that the film gaps can be axially offset, or of different axial lengths, and still function in the above described manner within the above described system. In such examples, either film gap can be longer or shorter than the other, depending on the needs and characteristics of the particular engine system incorporating the film damper. Similarly, the radial height of the film gaps can be varied relative to each other, with the radial height of the film gap determining the phase of the pressure profile of the film gap. In some examples, the radial heights can be intentionally varied in order to tune the effective force acting on the corresponding rotor.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A bearing assembly for a gas turbine engine comprising:
a bearing housing (204) comprising a first bearing housing surface (205) and a second bearing housing surface (206) where the first and second bearing housing surfaces (205, 206) are substantially axially parallel relative to a rotor centerline;
a first piston ring groove (212) in the first bearing housing surface (205), a second piston ring groove (213) in the first bearing housing surface (205), a first piston ring (214) disposed in the first piston ring groove (212) and a second piston ring (215) disposed in the second piston ring groove (213);
a squeeze film damper (210) including
a first outer surface (209) radially adjacent to and opposing the first bearing housing surface (205);
a second outer surface (216) radially adjacent to and opposing the second bearing housing surface (206);
a third piston ring groove (217) in the second outer surface (216), a fourth piston ring groove (219) in the second outer surface (216), a third piston ring (220) disposed in the third piston ring groove (217) and a fourth piston ring (222) disposed in the fourth piston ring groove (219); wherein
one of the second piston ring (215) and the second piston ring groove (213) includes a pass-through feature (340) and at least one of the fourth piston ring (222) and the fourth piston ring groove (219) includes a pass-through feature (340), and wherein each of the pass through features (340) has a high diodicity; and
the bearing housing (204) comprising a damping fluid passage (224) configured to provide a damping fluid from an outlet to a first gap (211) radially between the first outer surface (209) and the first bearing housing surface (205) and to a second gap (223) radially between the second outer surface (216) and the second bearing housing surface (206).

2. The bearing assembly of claim 1, wherein the pass-through feature is a scalloping on a contact surface of the piston ring (215, 222).

3. The bearing assembly of claim 1 or 2, wherein the second piston ring (215) is between the first piston ring (214) and a fluid connection between the first gap (211) and the damping fluid passage (224), and wherein the fourth piston ring (222) is between the second gap (223) and the damping fluid passage (224).

4. The bearing assembly of claim 1, wherein the damping fluid passage (224) is connected to each of the first gap (211) and the second gap (223) via a single plenum (240).

5. The bearing assembly of claim 4, wherein the single plenum (240) provides axial vibration damping.

6. The bearing assembly of claim 4 or 5, further comprising a fifth piston ring (470) disposed in the damping fluid passage (410) upstream of the single plenum (420).

7. The bearing assembly of claim 6, wherein the fifth piston ring (470) includes a pass through feature (472).

8. The bearing assembly of claim 7, wherein the pass through feature (477) includes at least one groove intruding into a radially aligned contact surface of the fifth piston ring (470).

9. A method for maintaining pressure in a squeeze film bearing damper of a gas turbine engine comprising:
providing damping fluid from a supply line (224) to a first axially aligned damping gap (211) by passing the damping fluid through a first piston ring (215) disposed in a first piston ring groove (213) when a pressure in the first axially aligned damping gap (211) is lower than a pressure in the supply line (224); and
providing damping fluid from a supply line (224) to a second axially aligned damping gap (223), concentric with the first axially aligned damping gap (211), by passing the damping fluid through a second piston ring (222) disposed in a second piston ring groove (219) when a pressure in the second axially aligned damping gap (223) is lower than a pressure in the supply line (224), wherein one of the first piston ring (215) and the first piston ring groove (213) includes a pass-through feature (340) and at least one of the second piston ring (222) and the second piston ring groove (219) includes a pass-through feature (340), and wherein each of the pass through features (340) has a high diodicity.

10. The method of claim 9, wherein providing damping fluid from the supply line (224) to the first axially aligned damping gap (211) and from the supply line (224) to the second axially aligned damping gap (223) comprising passing the damping fluid through an annular plenum (240).

11. The method of claim 10, wherein providing damping fluid to the annular plenum (420) comprises passing damping fluid through a third piston ring (470) when a pressure in the supply line (410) is greater than a pressure in the annular plenum (420).

12. The method of claim 10 or 11, wherein each of the axially aligned damping gaps (211, 223) dampens radial vibrations, and wherein the annular plenum (240) dampens axial vibrations.

## Patentansprüche

1. Lageranordnung für ein Gasturbinentriebwerk, umfassend:
ein Lagergehäuse (204), das eine erste Lagergehäusefläche (205) und eine zweite Lagergehäusefläche (206) umfasst, wobei die erste und die zweite Lagergehäusefläche (205, 206) im Wesentlichen axial parallel relativ zu einer Rotormittellinie sind;
eine erste Kolbenringnut (212) in der ersten Lagergehäusefläche (205), eine zweite Kolbenringnut (213) in der ersten Lagergehäusefläche (205), einen ersten Kolbenring (214), der in der ersten Kolbenringnut (212) angeordnet ist und einen zweiten Kolbenring (215), der in der zweiten Kolbenringnut (213) angeordnet ist;
einen Quetschfilmdämpfer (210), beinhaltend
eine erste Außenfläche (209) radial benachbart zu und gegenüber der ersten Lagergehäusefläche (205);
eine zweite Außenfläche (216) radial benachbart zu und gegenüber der zweiten Lagergehäusefläche (206);
eine dritte Kolbenringnut (217) in der zweiten Außenfläche (216), eine vierte Kolbenringnut (219) in der zweiten Außenfläche (216), einen dritten Kolbenring (220), der in der dritten Kolbenringnut (217) angeordnet ist und einen vierten Kolbenring (222), der in der vierten Kolbenringnut (219) angeordnet ist;
wobei eines von dem zweiten Kolbenring (215) und der zweiten Kolbenringnut (213) ein Durchgangsmerkmal (340) beinhaltet und zumindest eines von dem vierten Kolbenring (222) und der vierten Kolbenringnut (219) ein Durchgangsmerkmal (340) beinhaltet, und wobei jedes der Durchgangsmerkmale (340) eine hohe Diodizität aufweist; und
das Lagergehäuse (204) einen Dämpffluiddurchlass (224) umfasst, der konfiguriert ist, um ein Dämpffluid von einem Auslass zu einem ersten Spalt (211) radial zwischen der ersten Außenfläche (209) und der ersten Lagergehäusefläche (205) und zu einem zweiten Spalt (223) radial zwischen der zweiten Außenfläche (216) und der zweiten Lagergehäusefläche (206) bereitzustellen.

2. Lageranordnung nach Anspruch 1, wobei das Durchgangsmerkmal ein Feston an einer Kontaktfläche des Kolbenrings (215, 222) ist.

3. Lageranordnung nach Anspruch 1 oder 2, wobei sich der zweite Kolbenring (215) zwischen dem ersten Kolbenring (214) und einer Fluidverbindung zwischen dem ersten Spalt (211) und dem Dämpffluiddurchlass (224) befindet, und wobei sich der vierte Kolbenring (222) zwischen dem zweiten Spalt (223) und dem Dämpffluiddurchlass (224) befindet.

4. Lageranordnung nach Anspruch 1, wobei der Dämpffluiddurchlass (224) über eine einzelne Kammer (240) mit jedem von dem ersten Spalt (211) und dem zweiten Spalt (223) verbunden ist.

5. Lageranordnung nach Anspruch 4, wobei die einzelne Kammer (240) axiale Vibrationsdämpfung bereitstellt.

6. Lageranordnung nach Anspruch 4 oder 5, ferner umfassend einen fünften Kolbenring (470), der in dem Dämpffluiddurchlass (410) stromaufwärts der einzelnen Kammer (420) angeordnet ist.

7. Lageranordnung nach Anspruch 6, wobei der fünfte Kolbenring (470) ein Durchgangsmerkmal (472) beinhaltet.

8. Lageranordnung nach Anspruch 7, wobei das Durchgangsmerkmal (477) zumindest eine Nut beinhaltet, die in eine radial ausgerichtete Kontaktfläche des fünften Kolbenrings (470) eindringt.

9. Verfahren zum Erhalten von Druck in einem Quetschfilmlagerdämpfer eines Gasturbinentriebwerks, umfassend:
Bereitstellen von Dämpffluid von einer Zufuhrleitung (224) zu einem ersten axial ausgerichteten Dämpfspalt (211), indem das Dämpffluid durch einen ersten Kolbenring (215) geleitet wird, der in einer ersten Kolbenringnut (213) angeordnet ist, wenn ein Druck in dem ersten axial ausgerichteten Dämpfspalt (211) niedriger als ein Druck in der Zufuhrleitung (224) ist; und
Bereitstellen von Dämpffluid von einer Zufuhrleitung (224) zu einem zweiten axial ausgerichteten Dämpfspalt (223), der konzentrisch zu dem ersten axial ausgerichteten Dämpfspalt (211) ist, indem das Dämpffluid durch einen zweiten Kolbenring (222) geleitet wird, der in einer zweiten Kolbenringnut (219) angeordnet ist, wenn ein Druck in dem zweiten axial ausgerichteten Dämpfspalt (223) niedriger als ein Druck in der Zufuhrleitung (224) ist, wobei eines von dem ersten Kolbenring (215) und der ersten Kolbenringnut (213) ein Durchgangsmerkmal (340) beinhaltet und zumindest eines von dem zweiten Kolbenring (222) und der zweiten Kolbenringnut (219) ein Durchgangsmerkmal (340) beinhaltet, und wobei jedes der Durchgangsmerkmale (340) eine hohe Diodizität aufweist.

10. Verfahren nach Anspruch 9, wobei das Bereitstellen von Dämpffluid von der Zufuhrleitung (224) zu dem ersten axial ausgerichteten Dämpfspalt (211) und von der Zufuhrleitung (224) zu dem zweiten axial ausgerichteten Dämpfspalt (223) das Leiten des Dämpffluids durch eine ringförmige Kammer (240) umfasst.

11. Verfahren nach Anspruch 10, wobei das Bereitstellen von Dämpffluid an die ringförmige Kammer (420) das Leiten von Dämpffluid durch einen dritten Kolbenring (470) umfasst, wenn ein Druck in der Zufuhrleitung (410) größer als ein Druck in der ringförmigen Kammer (420) ist.

12. Verfahren nach Anspruch 10 oder 11, wobei jeder der axial ausgerichteten Dämpfspalte (211, 223) radiale Vibrationen dämpft, und wobei die ringförmige Kammer (240) axiale Vibrationen dämpft.

## Revendications

1. Agencement de palier pour un moteur à turbine à gaz comprenant :
un logement de palier (204) comprenant une première surface de logement de palier (205) et une seconde surface de logement de palier (206) où les première et seconde surfaces de logement de palier (205, 206) sont sensiblement axialement parallèles par rapport à une ligne centrale de rotor ;
une première rainure de segment de piston (212) dans la première surface de logement de palier (205), une deuxième rainure de segment de piston (213) dans la première surface de logement de palier (205), un premier segment de piston (214) disposé dans la première rainure de segment de piston (212) et un deuxième segment de piston (215) disposé dans la deuxième rainure de segment de piston (213) ;
un amortisseur à film d'huile (210) comportant
une première surface extérieure (209) radialement adjacente et opposée à la première surface de logement de palier (205) ;
une seconde surface extérieure (216) radialement adjacente et opposée à la seconde surface de logement de palier (206) ;
une troisième rainure de segment de piston (217) dans la seconde surface extérieure (216), une quatrième rainure de segment de piston (219) dans la seconde surface extérieure (216), un troisième segment de piston (220) disposé dans la troisième rainure de segment de piston (217) et un quatrième segment de piston (222) disposé dans la quatrième rainure de segment de piston (219) ; dans lequel
l'un du deuxième segment de piston (215) et de la deuxième rainure de segment de piston (213) comporte un élément de passage (340) et au moins l'un du quatrième segment de piston (222) et de la quatrième rainure de segment de piston (219) comporte une élément de passage (340), et dans lequel chacun des éléments de passage (340) a une diodicité élevée ; et
le logement de palier (204) comprenant un passage de fluide d'amortissement (224) configuré pour fournir un fluide d'amortissement depuis une sortie vers un premier espace (211) radialement entre la première surface extérieure (209) et la première surface de logement de palier (205) et vers un second espace (223) radialement entre la seconde surface extérieure (216) et la seconde surface de logement de palier (206).

2. Agencement de palier selon la revendication 1, dans lequel l'élément de passage est une échancrure sur une surface de contact du segment de piston (215, 222).

3. Agencement de palier selon la revendication 1 ou 2, dans lequel le deuxième segment de piston (215) est entre le premier segment de piston (214) et une liaison fluidique entre le premier espace (211) et le passage de fluide d'amortissement (224), et dans lequel le quatrième segment de piston (222) est entre le second espace (223) et le passage de fluide d'amortissement (224).

4. Agencement de palier selon la revendication 1, dans lequel le passage de fluide d'amortissement (224) est lié à chacun du premier espace (211) et du second espace (223) par l'intermédiaire d'un plénum unique (240).

5. Agencement de palier selon la revendication 4, dans lequel le plénum unique (240) fournit un amortissement axial des vibrations.

6. Agencement de palier selon la revendication 4 ou 5, comprenant en outre un cinquième segment de piston (470) disposé dans le passage de fluide d'amortissement (410) en amont du plénum unique (420).

7. Agencement de palier selon la revendication 6, dans lequel le cinquième segment de piston (470) comporte un élément de passage (472).

8. Agencement de palier selon la revendication 7, dans lequel l'élément de passage (477) comporte au moins une rainure pénétrant dans une surface de contact radialement alignée du cinquième segment de piston (470).

9. Procédé de maintien de pression dans un amortisseur de palier à film d'huile d'un moteur à turbine à gaz comprenant :
la fourniture d'un fluide d'amortissement depuis une conduite d'alimentation (224) vers un premier espace d'amortissement aligné axialement (211) en faisant passer le fluide d'amortissement à travers un premier segment de piston (215) disposé dans une première rainure de segment de piston (213) lorsqu'une pression dans le premier espace d'amortissement aligné axialement (211) est inférieure à une pression dans la conduite d'alimentation (224) ; et
la fourniture d'un fluide d'amortissement depuis une conduite d'alimentation (224) vers un second espace d'amortissement aligné axialement (223), concentrique avec le premier espace d'amortissement aligné axialement (211), en faisant passer le fluide d'amortissement à travers un deuxième segment de piston (222) disposé dans une deuxième rainure de segment de piston (219) lorsqu'une pression dans le second espace d'amortissement aligné axialement (223) est inférieure à une pression dans la conduite d'alimentation (224), dans lequel l' un du premier segment de piston (215) et de la première rainure de segment de piston (213) comporte un élément de passage (340) et au moins l'un du deuxième segment de piston (222) et de la deuxième rainure de segment de piston (219) comporte un élément de passage (340), et dans lequel chacun des éléments de passage (340) a une diodicité élevée.

10. Procédé selon la revendication 9, dans lequel la fourniture d'un fluide d'amortissement depuis la conduite d'alimentation (224) vers le premier espace d'amortissement aligné axialement (211) et depuis la conduite d'alimentation (224) vers le second espace d'amortissement aligné axialement (223) comprenant le passage du fluide d'amortissement à travers un plénum annulaire (240).

11. Procédé selon la revendication 10, dans lequel la fourniture d'un fluide d'amortissement vers le plénum annulaire (420) comprend le passage d'un fluide d'amortissement à travers un troisième segment de piston (470) lorsqu'une pression dans la conduite d'alimentation (410) est supérieure à une pression dans le plénum annulaire (420).

12. Procédé selon la revendication 10 ou 11, dans lequel chacun des espaces d'amortissement alignés axialement (211, 223) amortit des vibrations radiales, et dans lequel le plénum annulaire (240) amortit des vibrations axiales.
